# EUROPEAN PATENT APPLICATION

(11) **EP 1 028 337 A2**
(43) Date of publication of application: **16.08.2000**
(21) Application number: 00300734.1
(22) Date of filing: 31.01.2000
(51) Int. Cl.: G02B 6/38

(54) **Apparatus and method for manufacture of optical fiber plastic connectors**

(30) Priority: 11.02.1999 US 250320
(71) Applicant: LUCENT TECHNOLOGIES INC., Murray Hill, New Jersey 07974-0636 (US)
(72) Inventor: Shahid, Muhammed Afzal, Snellville, Georgia 30278 (US)
(74) Representative: Johnston, Kenneth Graham

(57) **Abstract**

The invention is as defined by the claims. Embodiments of the invention include a transfer molding method and mold apparatus for manufacturing optical fiber connectors made of plastic such as mechanical transfer (MT) connectors. The inventive method includes improved optical fiber coupling accuracy by compensating for molding induced shrinkage more accurately than conventional manufacturing. In particular, the transfer molding method includes providing a mold with inverse connector features that are dimensioned and spaced to compensate for differential shrinkage that occurs during processing. The degree of dimensioning and spacing is determined, for example, by experimental processes using similar molding parameters. Once the mold is provided, the core pins are positioned in the appropriate mold features and the mold is filled with a material to be cured into one or more connectors. After curing, the core pins are removed from the molded connector and the molded connector is removed from the mold. The resulting connector has features whose dimensions and spacing align better with other connectors made by similar processing thereby providing improved optical fiber coupling efficiency by compensating for molding induced shrinkage more accurately than conventional manufacturing processes.

## Description

### Background of the Invention

### 1. Field of the Invention

The invention relates to optical fiber connectors. More particularly, the invention relates to improved methods and devices for manufacturing plastic optical fiber connectors.

### 2. Description of the Related Art

Devices for connecting optical fibers often must be manufactured in accordance with certain standards so that when a pair of connectors are mated the optical fibers contained in each connector are properly aligned for sufficient coupling of light therebetween. Such connectors include those capable of accommodating linear fiber arrays, for example, Mechanical Transfer (MT) connectors. MT connectors typically are made in various sizes for up to twelve fibers in a linear array (for example, an optical fiber ribbon cable). MT connectors have ferrules that, when abutted and held together mechanically (for example, with an axial loading spring), allow the transfer of optical energy (that is, optical coupling) between the fibers in the abutted ferrule pairs. Similar compatible connectors are sized and configured to include multi-dimensional, linear arrays of fibers (that is, 12 x n fibers).

The MT connector typically includes a substantially rectilinear body having a front mating face and a parallel rear face. The optical fibers enter the MT connector through the rear face as part of a fiber ribbon cable and extend through the holes up to the front mating face. Preferably, the ends of the fibers are flush with the front mating face.

The MT connector bodies typically are manufactured by a transfer molding process in which the holes are formed by molding around precisely sized and positioned pins. After molding and curing, the pins are withdrawn to leave the holes for the fibers. The MT connector bodies also are formed with a cavity extending into the body from its upper surface and intersecting the precision holes. Another relatively large opening is formed through the rear face, which also intersects the cavity. The ribbon cable is inserted through the opening in the rear face, and the forward ends of the fibers are stripped from the ribbon. With the assistance of, for example, a plurality of grooves or other features, the forward ends of the of the fibers are guided within the cavity into the precision holes, from which they extend outwardly beyond the front mating face. The fibers are then set in place by epoxy or other suitable adhesive. Finally, the front mating face of the body and the optical fibers extending through the holes are polished so that the optical fiber ends are co-planar with the front mating face.

MT connectors made by conventional manufacturing techniques provide relatively reliable connections between optical fiber arrangements in applications where alignment tolerances are somewhat loose, for example, several microns. However, when alignment tolerances need to be, for example, 1-2 microns or less, it is desirable to have available methods for manufacturing optical fiber MT and MT-compatible connectors that provide improved optical fiber coupling accuracy. Accordingly, there is a need to improve the accuracy of the feature dimensions within MT and MT-compatible connectors that inherently are caused by conventional MT connector manufacturing techniques.

### Summary of the Invention

The invention is as defined by the claims. Embodiments of the invention include a transfer molding method and mold insert apparatus for manufacturing optical fiber connectors, such as Mechanical Transfer (MT) connectors and MT-compatible connectors, that provide improved optical fiber coupling accuracy by compensating for molding induced shrinkage more accurately than conventional manufacturing. In particular, the transfer molding method includes providing a mold with inverse connector features that are dimensioned and spaced to compensate for differential shrinkage that occurs during processing. The degree of dimensioning and spacing is determined, for example, by experimental processes using similar molding parameters. Once the mold is provided, the core pins are positioned in the appropriate mold features and the mold is filled with a material to be cured into one or more connectors. After curing, the core pins are removed from the molded connector and the molded connector is removed from the mold. The resulting connector has features whose dimensions and spacing align better with other connectors, particularly those made by similar processing.

The inventive insert apparatus includes features and inverse features whose dimensions and spacing therebetween are sized depending on the anticipated differential, molding induced shrinkage. The extent of the differential, molding induced shrinkage is determined experimentally, for example, using similar materials and processing parameters.

### Brief Description of the Drawings

The nature, advantages and various additional features of the invention will appear more fully upon consideration of the experimental data and illustrative embodiments now to be described in detail in the accompanying drawings.

In the drawings:
Fig. 1 is a perspective view of a conventional mechanical transfer (MT) connector;
Fig. 2 is a perspective view of the alignment and mating of a conventional pair of corresponding MT connectors;
Fig. 3 is a perspective view of a simplified mold used for manufacturing MT connectors made of plastic or similar materials;
Fig. 4 is a cross-sectional view of the mold of Fig. 3;
Fig. 5 is a schematic flow chart illustrating a transfer molding method for manufacturing MT connectors made of plastic or similar materials according to embodiments of the invention; and
Fig. 6 is a graph of the standard deviation of coupling loss for a plurality of fibers within conventional linear array connectors, that is, connectors having no molding induced shrinkage compensation.

### Detailed Description

In the following description, similar components we referred to by the same reference numeral to enhance the understanding of the invention through the description of the drawings and, where applicable, to simplify the sequential aspect of the drawings.

Although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

Embodiments of the invention are based on the advantageous realization that transfer molded optical connectors and other parts made by transfer molding processes suffer from shrinkage-related problems, including non-uniform or differential shrinkage of features. The shrinkage problems cause, for example, decreased coupling efficiency when optical fibers in the connectors are aligned with corresponding fibers in other optical fiber connectors.

The realization that shrinkage of MT connector features made by transfer molding processes is non-uniform is unexpected at least to the extent that shrinkage-related problems conventionally are thought not to occur in transfer molding processes and, as such, transfer molding processes conventionally are used to avoid or overcome the shrinkage-related problems of connector manufacturing processes such as injection molding. However, embodiments of the invention take into consideration the advantageous realization that shrinkage, including differential shrinkage, does occur in MT processes and appropriate compensation is needed.

Conventionally, transfer molding processes for making MT connectors are used instead of processes such as injection molding for a number of reasons, including the perception that transfer molding processes do not suffer from the differential shrinkage-related problems of other processes. Such belief resides in the fact that, for example, the molding compounds typically used in transfer molding processes are special in that these materials are not as likely to change size or shape once set. Also, transfer molding processing temperatures generally are lower than the processing temperatures of other processes, for example, injection molded processes. Therefore, shrinkage-related problems attributable to specific molding materials and/or temperature variance typically are reduced.

However, transfer molding processes do experience shrinkage-related problems, the realization of which forms the basis of embodiments of the invention. More specifically, as will be discussed in greater detail hereinbelow, shrinkage in transfer molding processes includes differential shrinkage, and embodiments of the invention compensate for such shrinkage differentially rather than uniformly or not at all. Conventional transfer molding processes do not make use of differential shrinkage compensation.

In general, shrinkage compensation does exist, but typically in processes that are known to suffer from molding induced shrinkage, for example, injection molding processes. Conventional shrinkage compensation for non-transfer molding processes includes uniform shrinkage compensation (see, for example, U.S. 5,388,174, issued to Roll et al., in which uniform shrinkage compensation is applied to injection molding processes).

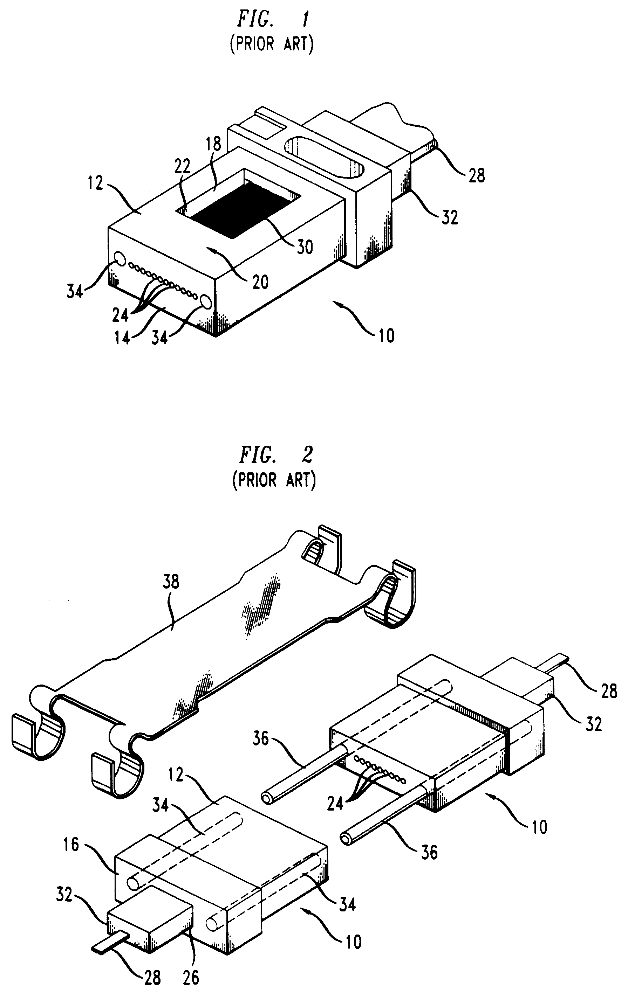

Referring now to Figs. 1-2, conventional mechanical transfer (MT) connectors 10 are shown. Each connector 10 includes a body 12 having a front mating face 14 and a rear face 16, which typically is parallel to front mating face 14. A substantially rectilinear cavity 18 extends into the body 12 from an upper surface 20 thereof. The cavity 18 is bounded by a front wall 22, which typically is parallel to the front mating face 14. A plurality of precision holes 24 extends through the body 12 from the front mating face 14 to the front wall 22 of the cavity 18. Typically, the holes 24 are formed in a linear array and orthogonal to the front mating face 14. A relatively large opening 26 is formed in the body 12 and extends from the rear face 16 to the cavity 18.

The optical fibers to be installed in the connectors 10 are contained within a ribbon cable (shown generally as 28). Typically, the optical fibers are conventional glass, multi-mode fibers having a core in the range of approximately 50-65 microns and an overall diameter of approximately 125 microns. However, the optical fibers may be single mode fibers having a core in the range of approximately 8-10 microns and an overall diameter of approximately 125 microns, or conventional glass fibers coated with a thin layer of polyimide, giving them a total diameter of 145 microns.

The ribbon cable 28 is inserted through the opening 26 in the rear face 16 and into the cavity 18. The forward ends of the optical fibers are stripped and separated from the ribbon cable 28 and then are manipulated within the cavity 18 into the holes 24. The forward ends of the optical fibers are moved forward until they extend outwardly beyond the front mating face 14. A plurality of linear grooves 30 is formed in the cavity, for example, in the floor of the cavity 18, to assist in the manipulation of the fibers into the holes 24. Typically, the grooves 30 are formed to correspondingly align with the holes 24.

Once the forward ends of the optical fibers are positioned within the holes 24 as desired, epoxy or other suitable adhesive is used to set the fibers in place by filling the cavity 18, the opening 26 and any spaces within the holes 24. Also, epoxy is useful in bonding a strain relief 32 where the ribbon cable 28 exits the body 12 at the rear face 16. After the epoxy has been set forward ends of the optical fibers are polished to be substantially integral with the front mating face 14. In this manner, the polished fiber ends and the integral mating face 14 offer a smooth mating surface for efficient transmission of light between corresponding fibers of mating connectors.

The connector body 12 also is formed with guide holes 34 dimensioned to receive corresponding guide pins 36. For example, a pair of guide holes 34 flank the linear array of holes 24 in connector 10. Also, as shown in Figure 2, a corresponding pair of guide pins 36 is set into its pair of guide holes 34 and held in place by suitable means. Thus, when the connectors 10 are to be mated, the guide pins 36 are inserted into the guide holes 34 of the connectors 10, thereby precisely aligning corresponding fibers exposed in the holes 24 at the front mating faces 14 of the two connectors. A clip 38 is useful to maintain contact between the front mating faces 14 of the mating connectors 10, with the clip 38 bearing against the rear faces 16 of both the connectors 10.

Referring now to Fig. 3, a perspective view of a simplified mold 40 used for manufacturing MT or MT-compatible connectors made of plastic or other suitable materials is shown. The mold 40 includes an upper die 42 and a lower die 44. The upper and lower dies are made of, for example, hardened steel or other suitable material. Also, the mold 40 includes a first set of core pins 52 for forming the precision holes 24 (see Figs. 1-2) in the mating face 14 of the connector 10 and a second set of core pins 54 for forming the guide holes 34 (see Figs. 1-2) in the mating face 14 of the connector 10.

The core pins are made of, for example, hardened steel or other material suitable to withstand the rigors of manufacturing processes. Although the core pins are shown separated, it is understood that it is possible for the pins to be connected together as part of an assembly (not shown). Typically, to allow for conventional alignment tolerances, the first set of core pins 52 are sized several times larger than the optical fibers 28 that subsequently will be positioned therein. Similarly, the second set of core pins 54 are sized several times larger than the guide pins 36 that subsequently will be positioned therein. For example, the first set of core pins 52 used to form precision holes 24 for optical fibers having diameters of approximately 125 microns (µm) typically have diameters of approximately 127 µm. Similarly, the second set of core pins 54 used to form guide holes 34 for guide pins 36 having diameters of approximately 700 microns (µm) typically have diameters of approximately 704 µm.

The lower die 44 includes a cavity for molding the body 12, a first set of v-grooves 62 for positioning the first set of core pins 52 (that is, the core pins that form the precision holes 24) and a second set of v-grooves 64 for positioning the second set of core pins 54 (that is, the core pins that form the guide holes 34). The v-grooves conventionally are formed so that they are uniformly dimensioned as desired and the spacing between adjacent v-grooves is equidistant.

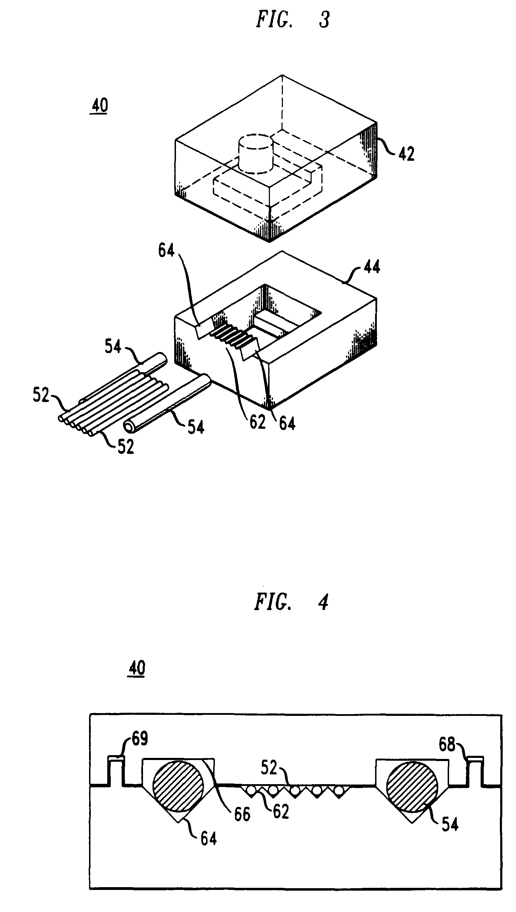

The upper die 42 typically includes a cavity that complements that of the lower die 44. However, as shown in Fig. 4, the upper die 42 typically does not include complementary v-grooves (although it can) but rather a pair of U-groove indentations 66 corresponding to the second set of v-grooves 64. The U-groove indentations 66 assist in maintaining the position of the second set of core pins 54. A pair of alignment pins and corresponding alignment pin recessions (not shown) assist in aligning the upper and lower dies when forming the mold 40.

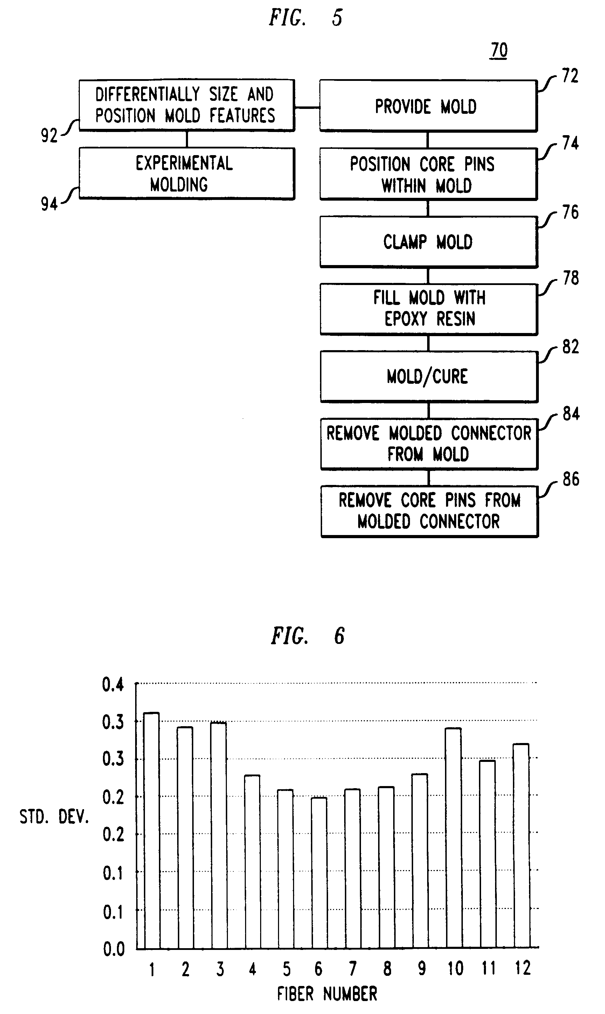

Referring now to Fig. 5, a method 70 for manufacturing MT connectors according to embodiments of the invention is shown. The first step 72 is to provide a mold 40 for use in manufacturing MT connectors. As discussed previously herein, the mold 40 includes an upper die 42 and a lower die 44 with various cavities formed therein for molding MT connectors and their features.

The next step 74 of the method 70 includes setting or otherwise positioning the core pins within the mold 40. Typically, the core pins (with or without an attached core pin assembly) are positioned within the lower die 42 whereby the first set of core pins 52 fits within the first set of v-grooves 62 and the second set of core pins 54 fits within the second set of v-grooves 64. Next, a clamping step 76 clamps the upper and lower dies together to fix the position of the core pins in the mold 40.

The next step 78 is to fill the mold 40 with a material suitable for forming the MT connector 10. Typically, the mold is filled with an epoxy resin suitable for forming MT connectors 10. Once the mold 40 has been filled with the epoxy resin, a curing step 82 is performed. For example, contents of the mold are held at a temperature of approximately 175 ±5 °C for approximately 75-145 seconds, which includes the curing time.

Once the curing step 82 is completed, a removal step 84 is performed in which the MT connector 10 is removed from the mold 40. More specifically, the removal step 84 is performed by opening the mold 40, that is, separating the upper die 42 from the lower die 44 and removing the connector 10 therefrom. Once the molded MT connector 10 is removed from the mold 40, a core pin removal step 86 is performed. In this step, the core pins (with or without the core pin assembly) are removed from the molded MT connector 10. Once the core pins have been removed from the connector 10, the connector 10 is ready for accepting optical fibers and for mating with similar connectors, as discussed hereinabove and shown in Figs. 1-2.

Although the epoxy resin used in making the MT connectors of the type discussed hereinabove typically includes filler materials such as glass fibers, globules and minerals to control and minimizing shrinkage, the MT connectors made therefrom still suffer from shrinkage and expansion during their manufacturing process. As a result, the features within the MT connectors often are affected adversely to the extent that the accuracy of the subsequent optical fiber alignment is degraded.

Major sources of mismatch that adversely affect optical coupling efficiency include "core offset" and general inconsistencies of connector features inherently caused by MT manufacturing processes. Core offset, which refers to the offset of an optical fiber core within its cladding, results from inherent flaws in optical fiber manufacturing techniques, and thus is not addressed herein. For more on ferrule offset, see, for example, "Design and performance advance in MT connectors", Lightwave, Nov. 197, pages 61-67, especially Fig. 4 and accompanying text therein.

As mentioned previously herein, the core pins in the first set 52 are sized slightly larger than the optical fibers 28 that subsequently will be positioned therein to allow for inconsistencies in, for example, fiber diameter, fiber coating and fiber-core concentricity. Typically, the first set of core pins 52, which are used to form precision holes 24 for optical fibers having diameters of approximately 125 microns (µm), have diameters of approximately 127 µm. Similarly, the second set of core pins 54 used to form guide holes 34 for guide pins 36 having diameters of approximately 700 microns (µm) typically have diameters of approximately 704 µm.

However, according to embodiments of the invention, another major source of mismatch is shrinkage, that is, molding induced shrinkage. Heretofore, shrinkage and associated shrinkage-related problems have not been taken into account by conventional MT connector manufacturing processes. Furthermore, much of the shrinkage is nonuniform, for example, up to approximately 2.0% of the feature size. For purposes of discussion herein, shrinkage or molding induced shrinkage is defined herein as the absolute difference between a feature size on the mold or mold die and the corresponding feature size on molded MT connector itself. Also, for features such as v-grooves and u-grooves, shrinkage or molding induced shrinkage includes absolute differences in spacing therebetween.

Conventionally, the degree of oversizing of features, for example, core pins, v-grooves, u-grooves and other connector features, is believed to compensate for such shrinkage. That is, conventional oversizing should lead one skilled in the art to conclude that the inconsistencies mentioned above are compensated for adequately. Similarly, any shrinkage of connector features that has occurred during manufacturing thereof (whether perceived or not) likewise should be compensated for by such oversizing.

Indeed, for applications where alignment tolerances are somewhat loose, for example, several microns, conventional oversizing of features often is satisfactory. For example, conventional oversizing may be sufficient for some multi-mode applications. However, when alignment tolerances are required to be, for example, within 1-2 microns or less, as they often are in many single-mode applications, more accurate shrinkage compensation is necessary.

Therefore, in addition to conventional oversizing efforts, embodiments of the invention further improve alignment accuracy by differentially compensating for the differential shrinkage that occurs to MT and MT-like connector features during the manufacturing process. Referring again to Fig. 5, the differential shrinkage compensation step is shown as 92. For example, differential compensation is provided according to embodiments of the invention by differentially modifying the feature dimensions and spacing therebetween of molds used for manufacturing MT connectors. The degree to which the feature sizes and spacing are modified is determined by characterizing the extent of the shrinkage, for example, by interpreting experimental results from the first runs of the molds.

That is, one or more experimental molding steps 94 are performed using conventional process parameters and molding conditions similar to those that are used in the actual molding process. The parameters include, for example, specific processing times and temperatures, as well as the specific types of materials used in making the master chips and the connectors. That is, the experimental molding process used to establish the set of differential shrinkage values duplicates, to a certain extent, the actual MT connector molding process described hereinabove.

Based on the results from the experimentation, the features within the molds used for manufacturing the MT connectors are sized and spaced accordingly to compensate for the differential shrinkage that is to occur. According to embodiments of the invention, existing molds are modified or, alternatively, new molds are fabricated with the new dimensions. Also, modifications are made to any inserts that are used with the mold. Thus, according to embodiments of the invention, differential shrinkage of connector features is recognized, measured and compensated for accordingly to improve the coupling efficiency of optical fibers aligned by the connection of their respective connectors with a mating connector.

Experimentation associated with embodiments of the invention has shown that molding induced shrinkage of MT connector features caused by MT connector molding processes is non-uniform for different connector sizes and different areas of the plastic connector. For example, in general, this "edge effect" causes lateral shrinkage (that is, shrinkage perpendicular to the direction of, for example, the V-grooves) to be greater in areas near the edges of the MT connector compared to areas of the connector within the interior. Referring now to Fig. 6, a graph is shown of the standard deviation of coupling loss for a plurality of fibers within a connector. Each bar represents the standard deviation of 818 optical connections between randomly connected 12-fiber MT connectors. As can be seen, the standard deviation of coupling loss for fibers near the edges of the linear array of fibers (that is, fibers nearer the guide holes) is greater than the standard deviation of coupling loss for fibers within the interior of the connector.

Also, in general, molding induced shrinkage is greater for larger MT connectors. Such differential shrinkage can be referred to as a "size effect". However, providing differential compensation in accordance with embodiments of the invention compensates for both edge and size effects.

It will be apparent to those skilled in the art that many changes and substitutions can be made to the embodiments of the optical fiber connection manufacturing method and apparatus described herein without departing from the spirit and scope of the invention as defined by the appended claims and their full scope of equivalents.

## Claims

1. A transfer molding method (70) for making optical fiber connectors, said method comprising the steps of:
providing (72) a transfer molding mold (40), said mold having at least one cavity for forming said connectors and a plurality of inverse features formed therein for positioning optical fiber core pins (52) and guide pin core pins (54);
positioning (74) said core pins (52, 54) correspondingly within the plurality of inverse features (62, 64);
filling (78) said mold with a material to be cured into at least one connector;
curing (82) the material within said mold until the material forms at least one connector;
removing (84) the molded connector from said mold; and
removing (86) the core pins from the molded connector,
characterized in that
the dimensions and relative spacing with respect to one another of at least a portion of the plurality of inverse features are based on the differential shrinkage of features of similar connectors formed by similar moldings.

2. The method as recited in claim 1, wherein the dimensions of at least a portion of the plurality of inverse features are sized differentially larger than the final desired dimensions of the features formed thereby.

3. The method as recited in claim 1, wherein the relative spacing with respect to one another of at least a portion of the plurality of inverse features are sized differentially larger the final desired spacing of the features formed thereby.

4. The method as recited in claim 1, wherein the dimensions and relative spacing with respect to one another of at least a portion of the plurality of inverse features are based on experimental results of differential shrinkage occurring to similar connectors using similar moldings.

5. The method as recited in claim 1, wherein said mold further comprises an insert having the plurality of features formed therein and wherein said method further comprises the step of inserting the insert into the mold.

6. The method as recited in claim 1, wherein the dimensions and relative spacing with respect to one another of at least a portion of the plurality of features are sized differentially larger such that the standard deviation of the insertion loss of the optical fibers positioned within at least a portion of the plurality of features to the corresponding optical fibers of a mating connector is less than approximately 0.40.

7. The method as recited in claim 1, further comprising the step of determining the differential shrinkage by molding experimental connectors using a mold having features uniformly sized and spaced with respect to one another and measuring shrinkage values at various locations on said experimental connectors after experimental molding.

8. Apparatus (40) for use in transfer molding optical fiber connectors, said connectors having one or more features formed therein, said apparatus comprising:
a body (44) having a surface corresponding inversely to an optical fiber connector; and
one or more inverse features (62, 64) formed on said body surface,
characterized in that
said inverse features are differentially dimensioned and spaced with respect to one another to compensate for differential shrinkage of said connectors during molding.

9. The apparatus as recited in claim 8, wherein the dimensions and relative spacing with respect to one another of at least a portion of the plurality of inverse features are based on experimental results of differential shrinkage occurring to similar connectors using similar moldings.
